# EUROPEAN PATENT APPLICATION

(11) **EP 4 730 375 A1**
(43) Date of publication of application: **22.04.2026**
(21) Application number: 23921571.8
(22) Date of filing: 13.06.2023
(51) Int. Cl.: H01G 4/30

(54) **MULTILAYER CERAMIC CAPACITOR**

(71) Applicant: Murata Manufacturing Co., Ltd., Nagaokakyo-shi, Kyoto 617-8555 (JP)
(72) Inventor: OGUNI, Toshimi, Nagaokakyo-shi, Kyoto 617-8555 (JP); YAMADA, Mayumi, Nagaokakyo-shi, Kyoto 617-8555 (JP); HIRAI, Tomoaki, Nagaokakyo-shi, Kyoto 617-8555 (JP); SUGATA, Takeshi, Nagaokakyo-shi, Kyoto 617-8555 (JP)
(74) Representative: Stöckeler, Ferdinand
(86) International application number: PCT/JP2023/021882
(87) International publication number: WO 2024/257211

(57) **Abstract**

Provided are multilayer ceramic capacitors that are each able to reduce stress concentration due to an electrostrictive effect at the time of voltage application. The multilayer ceramic capacitors each include a first extension portion 31B, a first counter portion 31A, a second extension portion 32B, and a second counter portion 32A. The first extension portion 31B includes a first external electrode-side region 31BB, a first counter portion-side region 31BC, and a first intermediate region 31BA. The second extension portion 32B includes a second external electrode-side region 32BB, a second counter portion-side region 32BC, and a second intermediate region 32BA. A coverage of the first intermediate region 31BA and the second intermediate region 32BA is lower than a coverage of the first external electrode-side region 31BB and the second external electrode-side region 32BB. The coverage of the first intermediate region 31BA and the second intermediate region 32BA is lower than a coverage of the first counter portion 31A and the second counter portion 32A.

## Description

### TECHNICAL FIELD

The present invention relates to a multilayer ceramic capacitor.

### BACKGROUND ART

In the related art, multilayer ceramic capacitors have been known. In general, multilayer ceramic capacitors each include a multilayer body in which a plurality of dielectric layers and a plurality of internal electrode layers are alternately laminated (refer to Patent Document 1). In such multilayer ceramic capacitors, further reduction in size, increase in capacitance, and improvement in reliability are required. For this reason, a ferroelectric material having high permittivity may be used as the material of the dielectric layers. In addition, attempts have been made to reduce the thickness of the dielectric layers, to reduce the thickness of the internal electrode layers, and to increase the number of laminated layers of these layers.

### Citation List

### Patent Document

Patent Document 1: Japanese Unexamined Patent Application, Publication No. H8-306580

### DISCLOSURE OF THE INVENTION

### Problems to be Solved by the Invention

Such dielectric layers have piezoelectricity or electrostriction. Therefore, when a voltage is applied to each of the multilayer ceramic capacitors having such dielectric layers, strain corresponding to the magnitude of the applied voltage is generated in the multilayer body by the electrostrictive effect, and stress is generated in the multilayer ceramic capacitor.

Embodiments of the present invention provide multilayer ceramic capacitors that are each able to reduce stress concentration due to an electrostrictive effect at the time of voltage application, while maintaining a capacitance density and connectivity between internal electrode layers and external electrodes.

### Means for Solving the Problems

Embodiments of the present invention provide multilayer ceramic capacitors that each include: a multilayer body including a plurality of dielectric layers and a plurality of internal electrode layers that are laminated, a first main surface and a second main surface opposed to each other in a lamination direction, a first lateral surface and a second lateral surface opposed to each other in a width direction orthogonal or substantially orthogonal to the lamination direction, and a first end surface and a second end surface opposed to each other in a length direction orthogonal or substantially orthogonal to the lamination direction and the width direction; a first external electrode on the first end surface; and a second external electrode on the second end surface, in which the plurality of internal electrode layers include first internal electrode layers and second internal electrode layers; the first internal electrode layers each include a first extension portion and a first counter portion, the first extension portion including one end portion that extends toward and is exposed at the first end surface and is connected to the first external electrode, the first counter portion being connected to the first extension portion and opposed to a corresponding one of the second internal electrode layers provided adjacent to each other in the lamination direction; the second internal electrode layers each include a second extension portion and a second counter portion, the second extension portion including one end portion that extends toward and is exposed at the second end surface and is connected to the second external electrode, the second counter portion being connected to the second extension portion and opposed to a corresponding one of the first internal electrode layers provided adjacent to each other in the lamination direction; the first extension portion includes a first external electrode-side region in a vicinity of a portion of the first extension portion connected with the first external electrode, a first counter portion-side region in a vicinity of a portion of the first extension portion connected with the first counter portions, and a first intermediate region located between the first external electrode-side region and the first counter portion-side region; the second extension portion includes a second external electrode-side region in a vicinity of a portion of the second extension portion connected with the second external electrode, a second counter portion-side region in a vicinity of a portion of the second extension portion connected with the second counter portions, and a second intermediate region located between the second external electrode-side region and the second counter portion-side region; a coverage of the first intermediate region and the second intermediate region is lower than a coverage of the first external electrode-side region and the second external electrode-side region; and the coverage of the first intermediate region and the second intermediate region is lower than a coverage of the first counter portion and the second counter portion.

### Effects of the Invention

According to embodiments of the present invention, it is possible to provide multilayer ceramic capacitors that are each able to reduce stress concentration due to an electrostrictive effect at the time of voltage application, while maintaining a capacitance density and connectivity between internal electrode layers and external electrodes.

### BRIEF DESCRIPTION OF THE DRAWINGS

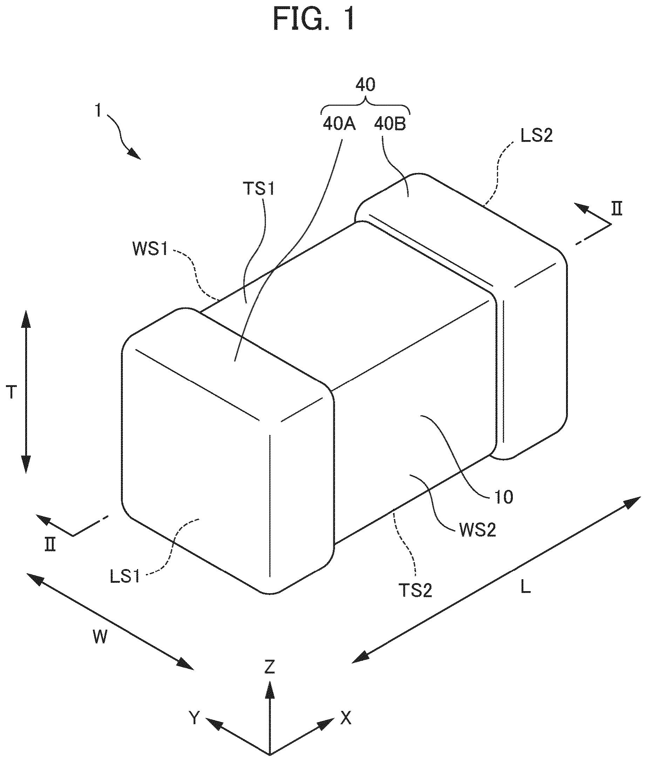

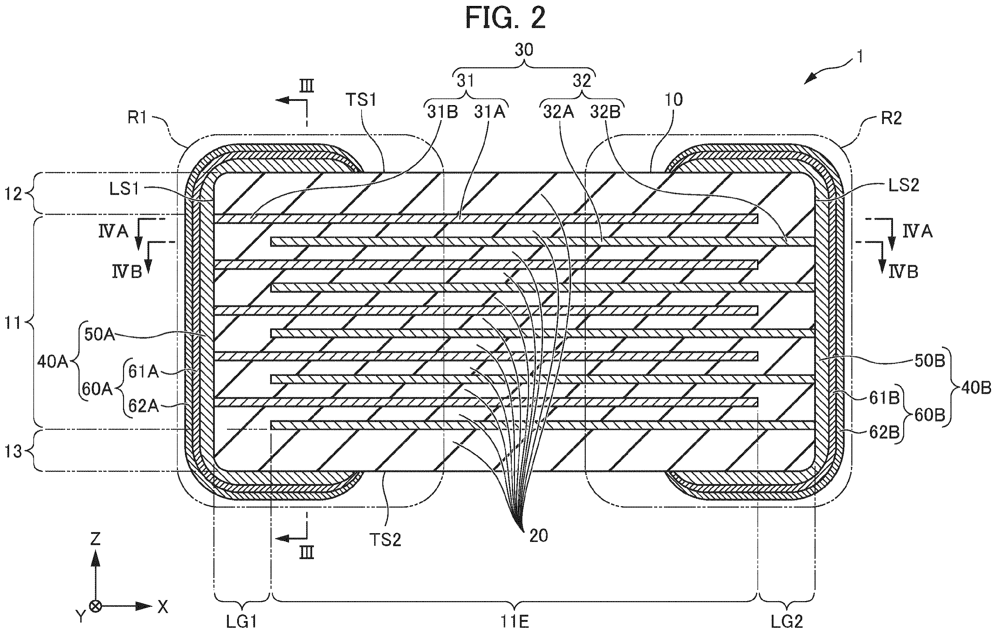

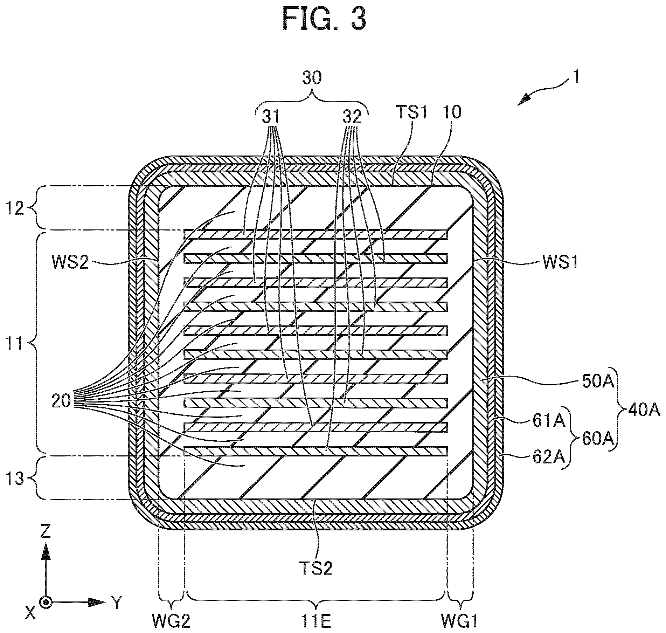

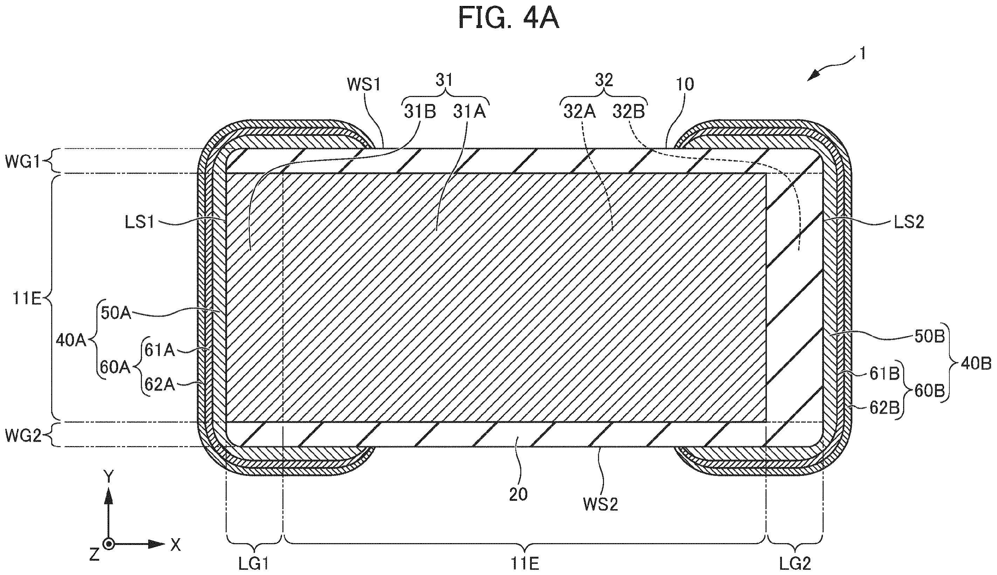

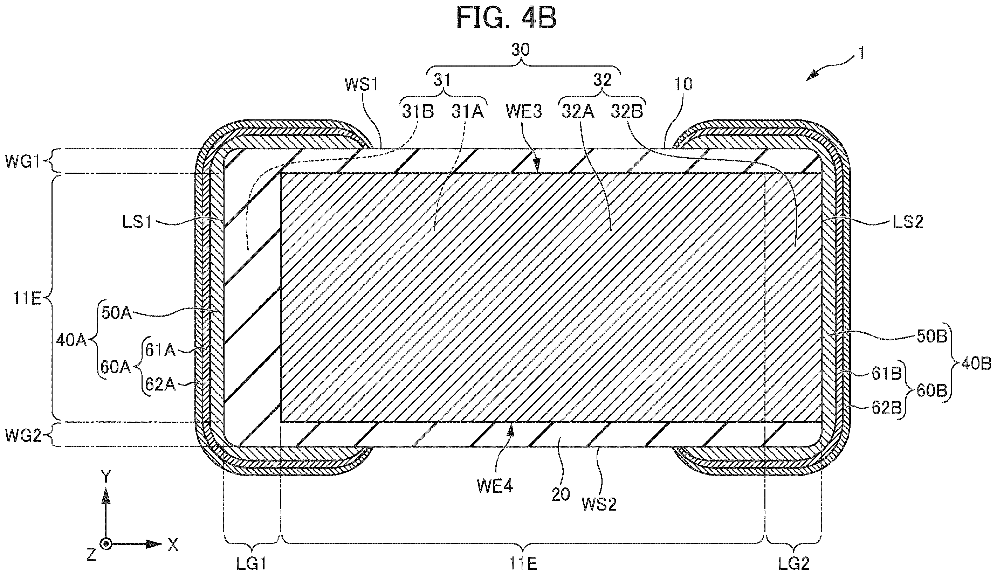

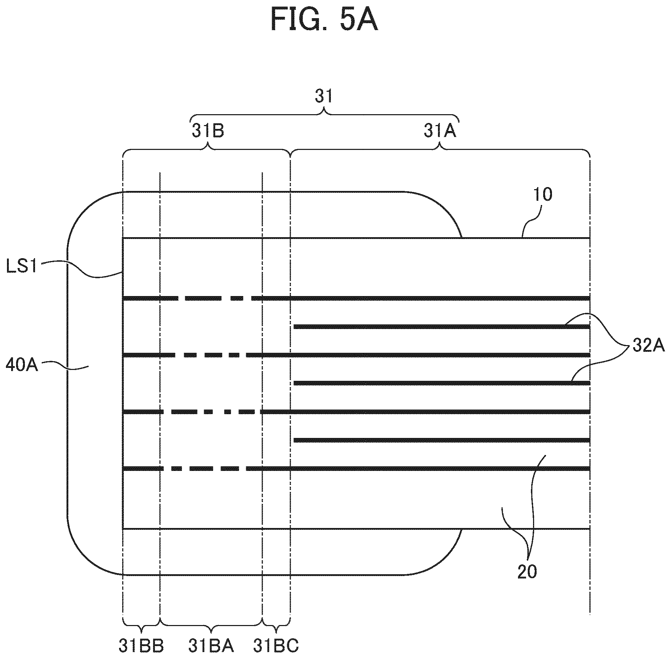

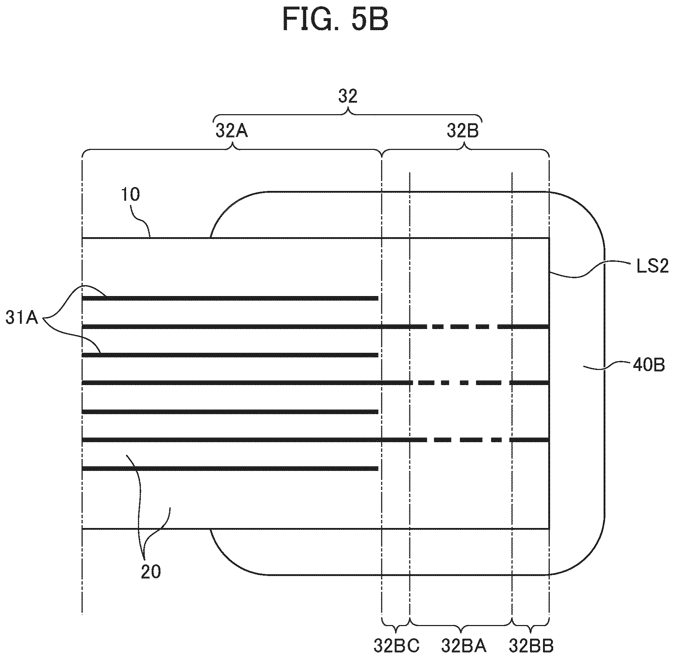

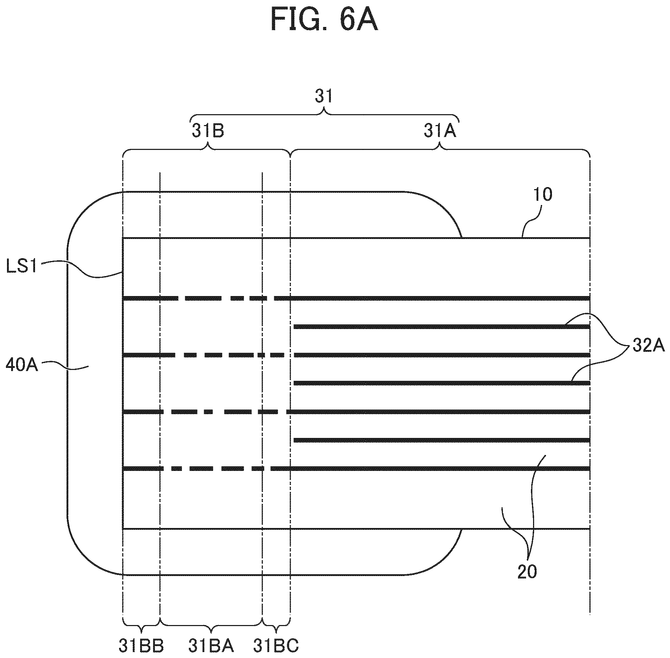

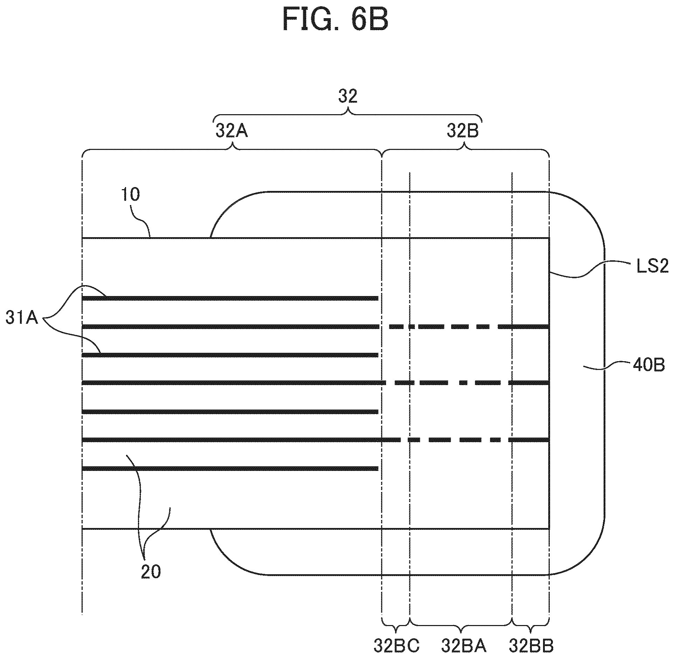

FIG. 1 is an external perspective view of a multilayer ceramic capacitor according to a first embodiment of the present invention. FIG. 2 is a cross-sectional view taken along the line II-II of FIG. 1. FIG. 3 is a cross-sectional view taken along the line III-III of FIG. 2. FIG. 4A is a cross-sectional view taken along the line IVA-IVA of FIG. 2. FIG. 4B is a cross-sectional view taken along the line IVB-IVB of FIG. 2. FIG. 5A is an enlarged cross-sectional view schematically showing a portion indicated by R1 in FIG. 2. FIG. 5B is an enlarged cross-sectional view schematically showing a portion indicated by R2 in FIG. 2. FIG. 6A is an enlarged cross-sectional view schematically showing a portion indicated by R1 in FIG. 2 in a multilayer ceramic capacitor according to a second embodiment of the present invention. FIG. 6B is an enlarged cross-sectional view schematically showing a portion indicated by R2 in FIG. 2 in the multilayer ceramic capacitor according to the second embodiment.

### PREFERRED MODE FOR CARRYING OUT THE INVENTION

### First Embodiment

Hereinafter, a multilayer ceramic capacitor 1 according to a first embodiment of the present disclosure will be described with reference to the drawings. FIG. 1 is an external perspective view of the multilayer ceramic capacitor 1 according to the embodiment. FIG. 2 is a cross-sectional view taken along the line II-II of FIG. 1. FIG. 3 is a cross-sectional view taken along the line III-III of FIG. 2. FIG. 4A is a cross-sectional view taken along the line IVA-IVA of FIG. 2. FIG. 4B is a cross-sectional view taken along the line IVB-IVB of FIG. 2.

As shown in FIG. 1, the multilayer ceramic capacitor 1 according to the embodiment has a substantially rectangular parallelepiped shape. The multilayer ceramic capacitor 1 includes a multilayer body 10 having a substantially rectangular parallelepiped shape, and a pair of external electrodes 40 provided at both end portions of the multilayer body 10 and spaced apart from each other.

In FIG. 1, an arrow T indicates a lamination (stacking) direction of the multilayer ceramic capacitor 1 and the multilayer body 10. The lamination direction T is also referred to as a thickness direction and a height direction of the multilayer ceramic capacitor 1 and the multilayer body 10. In FIG. 1, the arrow L indicates a length direction orthogonal or substantially orthogonal to the lamination direction T of the multilayer ceramic capacitor 1 and the multilayer body 10. In FIG. 1, the arrow W indicates a width direction orthogonal or substantially orthogonal to the lamination direction T and the length direction L of the multilayer ceramic capacitor 1 and the multilayer body 10. The pair of external electrodes 40 is provided at one end and the other end of the multilayer body 10 in the length direction L.

FIGS. 1 to 4B each show an XYZ orthogonal coordinate system. The length direction L of the multilayer ceramic capacitor 1 and the multilayer body 10 corresponds to the X direction. The width direction W of the multilayer ceramic capacitor 1 and the multilayer body 10 corresponds to the Y direction. The lamination direction T of the multilayer ceramic capacitor 1 and the multilayer body 10 corresponds to the Z direction. Here, the cross section shown in FIG. 2 is also referred to as an LT cross section. The cross section shown in FIG. 3 is also referred to as a WT cross section. The cross section shown in FIGS. 4A and 4B is also referred to as an LW cross section.

As shown in FIGS. 1 to 4B, the multilayer body 10 includes a first main surface TS1 and a second main surface TS2 which are opposed to each other in the lamination direction T, a first end surface LS1 and a second end surface LS2 which are opposed to each other in the length direction L orthogonal or substantially orthogonal to the lamination direction T, and a first lateral surface WS1 and a second lateral surface WS2 which are opposed to each other in the width direction W orthogonal or substantially orthogonal to the lamination direction T and the length direction L.

As shown in FIG. 1, the multilayer body 10 has a substantially rectangular parallelepiped shape. The dimension in the length direction L of the multilayer body 10 may be longer than the dimension in the width direction W. The corner portions and ridge portions of the multilayer body 10 are preferably rounded. The corner portions are portions where the three surfaces of the multilayer body intersect, and the ridge portions are portions where the two surfaces of the multilayer body intersect. In addition, unevenness or the like may be provided on a portion or the whole of the surface of the multilayer body 10.

The dimensions of the multilayer body 10 are not particularly limited. However, when the dimension in the length direction L of the multilayer body 10 is defined as L dimension, the L dimension is preferably 0.2 mm or more and 6 mm or less, for example. When the dimension of the multilayer body 10 in the lamination direction T is defined as T dimension, the T dimension is preferably 0.05 mm or more and 5 mm or less, for example. When the dimension of the multilayer body 10 in the width direction W is defined as W dimension, the dimension W is preferably 0.1 mm or more and 5 mm or less, for example.

As shown in FIGS. 2 and 3, the multilayer body 10 includes an inner layer portion 11, and a first main surface-side outer layer portion 12 and a second main surface-side outer layer portion 13 that sandwich the inner layer portion 11 in the lamination direction T.

The inner layer portion 11 includes a plurality of dielectric layers 20 and a plurality of internal electrode layers 30 alternately laminated in the lamination direction T. The inner layer portion 11 includes, in the lamination direction T, from the internal electrode layer 30 located closest to the first main surface TS1 to the internal electrode layer 30 located closest to the second main surface TS2. In the inner layer portion 11, a plurality of internal electrode layers 30 are opposed to each other with the dielectric layer 20 interposed therebetween. The inner layer portion 11 generates a capacitance and substantially defines and functions as a capacitor.

The plurality of dielectric layers 20 are each made of a dielectric material. The dielectric material may be a dielectric ceramic including a component such as BaTiO₃, CaTiO₃, SrTiO₃, or CaZrO₃. Furthermore, the dielectric material may be obtained by adding a secondary component such as a Mn compound, an Fe compound, a Cr compound, a Co compound, or a Ni compound to the main component. The dielectric material particularly preferably includes BaTiO₃ as a main component.

The thicknesses of the dielectric layers 20 are each preferably 0.2 µm or more and 10 µm or less, for example. The number of the dielectric layers 20 to be laminated (stacked) is preferably fifteen or more and 1200 or less, for example. The number of the dielectric layers 20 refers to the total number of dielectric layers 20 in the inner layer portion 11, and dielectric layers 20 in the first main surface-side outer layer portion 12 and the second main surface-side outer layer portion 13.

The plurality of internal electrode layers 30 includes a plurality of first internal electrode layers 31 and a plurality of second internal electrode layers 32. The first internal electrode layers 31 and the second internal electrode layers 32 are alternately provided in the lamination direction T with the dielectric layers 20 interposed therebetween. The first internal electrode layers 31 each extend toward the first end surface LS1 and are each exposed at the first end surface LS1. The second internal electrode layers 32 each extend toward the second end surface LS2 and are each exposed at the second end surface LS2. In the following description, when it is not necessary to distinguish between the first internal electrode layer 31 and the second internal electrode layer 32, the first internal electrode layer 31 and the second internal electrode layer 32 may be collectively referred to as an internal electrode layer 30.

As shown in FIG. 4A, the first internal electrode layers 31 each include a first counter portion 31A and a first extension portion 31B. The first counter portion 31A is a region opposed to the second internal electrode layer 32 with the dielectric layer 20 interposed therebetween, and is located inside the multilayer body 10. The first extension portion 31B is a portion which extends from the first counter portion 31A toward the first end surface LS1, and is exposed at the first end surface LS1.

As shown in FIG. 4B, the second internal electrode layer 32 includes a second counter portion 32A and a second extension portion 32B. The second counter portion 32A is a region opposed to the first internal electrode layer 31 with the dielectric layer 20 interposed therebetween, and is located inside the multilayer body 10. The second extension portion 32B is a portion extending from the second counter portion 32A toward the second end surface LS2, and is exposed at the second end surface LS2.

In the present embodiment, the first counter portion 31A and the second counter portion 32A are opposed to each other with the dielectric layer 20 interposed therebetween, such that a capacitance is generated, and the characteristics of a capacitor are developed.

The shapes of the first counter portion 31A and the second counter portion 32A are not particularly limited, but are preferably rectangular or substantially rectangular. However, the corner portions in the rectangular shape may be rounded, or the corner portions in the rectangular shape may be provided obliquely. The shapes of the first extension portion 31B and the second extension portion 32B are not particularly limited, but are preferably rectangular or substantially rectangular. However, the corner portions in the rectangular shape may be rounded, or the corner portions in the rectangular shape may be provided obliquely.

The dimension of the first counter portion 31A in the width direction W and the dimension of the first extension portion 31B in the width direction W may be the same, or either one of them may be smaller. The dimension of the second counter portion 32A in the width direction W and the dimension of the second extension portion 32B in the width direction W may be the same, or either one of them may be narrower.

The first internal electrode layers 31 and the second internal electrode layers 32 are each made of an appropriate electrically conductive material including a metal such as Ni, Cu, Ag, Pd or Au, or an alloy including at least one of these metals. When using an alloy, the first internal electrode layers 31 and the second internal electrode layers 32 may be each made of, for example, an Ag-Pd alloy.

The thicknesses of the first internal electrode layers 31 and the second internal electrode layers 32 are each preferably, for example, 0.2 µm or more and 2.0 µm or less. The total number of the first internal electrode layers 31 and the second internal electrode layers 32 is preferably fifteen or more and 1000 or less.

As shown in FIGS. 2 and 3, the first main surface side-outer layer portion 12 is located adjacent to the first main surface TS1 of the multilayer body 10. The first main surface side-outer layer portion 12 includes a plurality of dielectric layers 20 located between the first main surface TS1 and the internal electrode layer 30 closest to the first main surface TS1. On the other hand, the second main surface side-outer layer portion 13 is located adjacent to the second main surface TS2 of the multilayer body 10. The second main surface side-outer layer portion 13 includes a plurality of dielectric layers 20 located between the second main surface TS2 and the internal electrode layer 30 closest to the second main surface TS2. The dielectric layers 20 used in the first main surface side-outer layer portion 12 and the second main surface side-outer layer portion 13 may be the same as the dielectric layers 20 used in the inner layer portion 11.

The multilayer body 10 includes a counter electrode portion 11E. The counter electrode portion 11E is a portion where the first counter portion 31A of the first internal electrode layer 31 and the second counter portion 32A of the second internal electrode layer 32 are opposed to each other. The counter electrode portion 11E defines and functions as a portion of the inner layer portion 11. FIGS. 4A and 4B each show the range of the counter electrode portion 11E in the width direction W and the length direction L. The counter electrode portion 11E is also referred to as a capacitor active portion.

The multilayer body 10 includes lateral surface side-outer layer portions. The lateral surface side-outer layer portions include a first lateral surface side-outer layer portion WG1 and a second lateral surface side-outer layer portion WG2. The first lateral surface side-outer layer portion WG1 is a portion including the dielectric layer 20 located between the counter electrode portion 11E and the first lateral surface WS1. The second lateral surface side-outer layer portion WG2 is a portion including the dielectric layer 20 located between the counter electrode portion 11E and the second lateral surface WS2. FIG. 3, FIG. 4A, and FIG. 4B each show the ranges of the first lateral surface side-outer layer portion WG1 and the second lateral surface side-outer layer portion WG2 in the width direction W. The lateral surface side-outer layer portion is also referred to as a W gap or a side gap.

The multilayer body 10 includes end surface side-outer layer portions. The end surface side-outer layer portions include a first end surface side-outer layer portion LG1 and a second end surface side-outer layer portion LG2. The first end surface side-outer layer portion LG1 is a portion including the dielectric layer 20 and the first extension portion 31B located between the counter electrode portion 11E and the first end surface LS1. That is, the first end surface side-outer layer portion LG1 includes the portions of the plurality of dielectric layers 20 adjacent to the first end surface LS1 and the plurality of first extension portions 31B. The second end surface side-outer layer portion LG2 is a portion including the dielectric layer 20 and the second extension portion 32B located between the counter electrode portion 11E and the second end surface LS2. That is, the second end surface side-outer layer portion LG2 includes the portions of the plurality of dielectric layers 20 adjacent to the second end surface LS2 and the plurality of second extension portions 32B. FIGS. 2, 4A, and 4B each show the ranges of the first end surface side-outer layer portion LG1 and the second end surface side-outer layer portion LG2 in the length direction L. The end surface side-outer layer portion is also referred to as an L gap or an end gap.

As shown in FIGS. 1 and 2, the external electrodes 40 include a first external electrode 40A adjacent to the first end surface LS1 of the multilayer body 10 and a second external electrode 40B adjacent to the second end surface LS2 of the multilayer body 10.

It is to be noted that the basic configurations of the first external electrode 40A and the second external electrode 40B are the same. Furthermore, the first external electrode 40A and the second external electrode 40B have a shape that is substantially plane symmetrical with respect to the WT cross section at the center in the length direction L of the multilayer ceramic capacitor 1. Therefore, in the following description, when it is not necessary to distinguish between the first external electrode 40A and the second external electrode 40B, the first external electrode 40A and the second external electrode 40B may be collectively referred to as an external electrode 40.

The first external electrode 40A is provided on the first end surface LS1. The first external electrode 40A is in contact with the first extension portion 31B of each of the plurality of first internal electrode layers 31 exposed at the first end surface LS1. With such a configuration, the first external electrode 40A is electrically connected to the plurality of first internal electrode layers 31. The first external electrode 40A may be provided on a portion of the first main surface TS1 and a portion of the second main surface TS2, and also on a portion of the first lateral surface WS1 and a portion of the second lateral surface WS2. In the present preferred embodiment, the first external electrode 40A extends from the first end surface LS1 to a portion of the first main surface TS1 and to a portion of the second main surface TS2, and to a portion of the first lateral surface WS1 and to a portion of the second lateral surface WS2.

The second external electrode 40B is provided on the second end surface LS2. The second external electrode 40B is in contact with the second extension portion 32B of each of the plurality of second internal electrode layers 32 exposed at the second end surface LS2. With such a configuration, the second external electrode 40B is electrically connected to the plurality of second internal electrode layers 32. The second external electrodes 40B may be provided on a portion of the first main surface TS1 and a portion of the second main surface TS2, and also on a portion of the first lateral surface WS1 and a portion of the second lateral surface WS2. In the present preferred embodiment, the second external electrode 40B extends from the second end surface LS2 to a portion of the first main surface TS1 and to a portion of the second main surface TS2, and to a portion of the first lateral surface WS1 and a portion of the second lateral surface WS2.

As described above, in the multilayer body 10, the capacitance is generated by the first counter portions 31A of the first internal electrode layers 31 and the second counter portions 32A of the second internal electrode layers 32 which are opposed to each other with the dielectric layers 20 interposed therebetween. Therefore, characteristics of the capacitor are provided between the first external electrode 40A to which the first internal electrode layers 31 are connected and the second external electrode 40B to which the second internal electrode layers 32 are connected.

As shown in FIGS. 2, 4A, and 4B, the first external electrode 40A includes a first base electrode layer 50A and a first plated layer 60A provided on the first base electrode layer 50A. Furthermore, the second external electrode 40B includes a second base electrode layer 50B and a second plated layer 60B provided on the second base electrode layer 50B.

The first base electrode layer 50A is provided on the first end surface LS1. The first base electrode layer 50A is connected to the first extension portion 31B of each of the plurality of first internal electrode layers 31 exposed at the first end surface LS1. In the present preferred embodiment, the first base electrode layer 50A extends from the first end surface LS1 to a portion of the first main surface TS1 and to a portion of the second main surface TS2, and to a portion of the first lateral surface WS1 and to a portion of the second lateral surface WS2.

The second base electrode layer 50B is provided on the second end surface LS2. The second base electrode layer 50B is in contact with the second extension portion 32B of each of the plurality of second internal electrode layers 32 exposed at the second end surface LS2. In the present preferred embodiment, the second base electrode layer 50B extends from the second end surface LS2 to a portion of the first main surface TS1 and to a portion of the second main surface TS2, and to a portion of the first lateral surface WS1 and to a portion of the second lateral surface WS2.

The first base electrode layer 50A and the second base electrode layer 50B of the present embodiment are fired layers. It is preferable that the fired layers each include both a metal component, and either a glass component or a ceramic component, or both the glass component and the ceramic component. The metal component includes, for example, at least one selected from Cu, Ni, Ag, Pd, Ag-Pd alloys, Au, and the like. The glass component includes, for example, at least one selected from B, Si, Ba, Mg, Al, Li, and the like. As the ceramic component, the same or substantially same ceramic material as that of the dielectric layer 20 may be used, or a different ceramic material may be used. Ceramic components include, for example, at least one selected from BaTiO₃, CaTiO₃, (Ba, Ca)TiO₃, SrTiO₃, CaZrO₃, and the like.

The fired layer is obtained by, for example, applying an electrically conductive paste including glass and metal to the multilayer body 10 and firing it. The fired layer can be obtained by simultaneously firing (cofiring) a multilayer chip before firing, which is a material of the multilayer body 10 having a plurality of internal electrodes and dielectric layers, and an electrically conductive paste applied to the multilayer chip. Alternatively, the multilayer chip may be fired to obtain the multilayer body 10, following which an electrically conductive paste may be applied to the multilayer body 10 and the resulting product may be fired. In a case of the above-described cofiring, it is preferable that the fired layer is formed by baking a ceramic material added instead of the glass component. In such a case, it is particularly preferable to use, as the ceramic material to be added, the same or substantially same kind of ceramic material as the dielectric layer 20. The fired layer may include a plurality of layers.

The thickness of the first base electrode layer 50A located on the first end surface LS1 in the length direction L is preferably, for example, about 3 µm or more and about 200 µm or less in the middle of the first base electrode layer 50A in the lamination direction T and the width direction W.

The thickness of the second base electrode layer 50B located on the second end surface LS2 in the length direction L is preferably, for example, about 3 µm or more and about 200 µm or less in the middle of the second base electrode layer 50B in the lamination direction T and the width direction W.

When providing the first base electrode layer 50A to at least one of portions of the first main surface TS1 and the second main surface TS2, the thickness in the lamination direction T of the first base electrode layer 50A provided at this portion is preferably about 3 µm or more and about 40 µm or less in the middle in the length direction L and the width direction W of the first base electrode layer 50A provided at this portion, for example.

When providing the first base electrode layer 50A to portions of at least one of the first lateral surface WS1 and the second lateral surface WS2, the thickness in the width direction W of the first base electrode layer 50A provided at this portion is preferably about 3 µm or more and about 40 µm or less in the middle in the length direction L and the height direction T of the first base electrode layer 50A provided at this portion, for example.

When providing the second base electrode layer 50B to portions of at least one of the first main surface TS1 and the second main surface TS2, the thickness in the lamination direction T of the second base electrode layer 50B provided at this portion is preferably about 3 µm or more and about 40 µm or less in the middle in the length direction L and the width direction W of the second base electrode layer 50B provided at this portion, for example.

When providing the second base electrode layer 50B to portions of at least one of the first lateral surface WS1 and the second lateral surface WS2, the thickness in the width direction W of the second base electrode layer 50B provided at this portion is preferably about 3 µm or more and about 40 µm or less in the middle in the length direction L and the height direction T of the second base electrode layer 50B provided at this portion, for example.

In addition, the first base electrode layer 50A and the second base electrode layer 50B are not limited to the fired layers. The first base electrode layer 50A and the second base electrode layer 50B include at least one selected from a fired layer, an electrically conductive resin layer, a thin film layer, and the like. For example, the first base electrode layer 50A and the second base electrode layer 50B may be thin film layers. The thin film layer is formed by a thin film forming method such as sputtering or vapor deposition. The thin film layer is a layer of 10 µm or less on which metal particles are deposited.

The first plated layer 60A is provided to cover the first base electrode layer 50A.

The second plated layer 60B is provided to cover the second base electrode layer 50B.

The first plated layer 60A and the second plated layer 60B may include, for example, at least one selected from Cu, Ni, Sn, Ag, Pd, an Ag-Pd alloy, Au, and the like. Each of the first plated layer 60A and the second plated layer 60B may include a plurality of layers. The first plated layer 60A and the second plated layer 60B preferably provide a two-layer structure in which a Sn plated layer is formed on a Ni plated layer.

The first plated layer 60A is provided to cover the first base electrode layer 50A. In the present embodiment, the first plated layer 60A includes a first Ni plated layer 61A and a first Sn plated layer 62A located on the first Ni plated layer 61A.

The second plated layer 60B is provided to cover the second base electrode layer 50B. In the present embodiment, the second plated layer 60B includes a second Ni plated layer 61B and a second Sn plated layer 62B located on the second Ni plated layer 61B.

The Ni plated layer prevents the first base electrode layer 50A and the second base electrode layer 50B from being eroded by solder when the multilayer ceramic capacitor 1 is mounted. Further, the Sn plated layer improves solder wettability when the multilayer ceramic capacitor 1 is mounted. This facilitates mounting of the multilayer ceramic capacitor 1. The thickness of each of the first Ni plated layer 61A, the first Sn plated layer 62A, the second Ni plated layer 61B, and the second Sn plated layer 62B is preferably 2 µm or more and 10 µm or less.

The external electrode 40 of the present embodiment may include, for example, an electrically conductive resin layer containing electrically conductive particles and a thermosetting resin. The electrically conductive resin layer may be provided to cover the fired layer. When The electrically conductive resin layer is provided to cover the fired layer, the electrically conductive resin layer is provided between the fired layer and the plated layers (the first plated layer 60A and the second plated layer 60B). The electrically conductive resin layer may completely cover the fired layer or may cover a portion of the fired layer.

The electrically conductive resin layer containing the thermosetting resin is more flexible than, for example, an electrically conductive layer made of a plating film or a fired product of an electrically conductive paste. Therefore, the electrically conductive resin layer functions as a buffer layer even when a physical impact or an impact due to a thermal cycle is applied to the multilayer ceramic capacitor 1. Therefore, the electrically conductive resin layer reduces or prevents the occurrence of cracks in the multilayer ceramic capacitor 1.

The metal of the electrically conductive particles may be Ag, Cu, Ni, Sn, Bi, or an alloy containing them. The electrically conductive particles preferably include Ag. The electrically conductive particles are, for example, metal powder of Ag. Since Ag has the lowest specific resistance among metals, Ag is suitable as an electrode material. Since Ag is a noble metal, Ag is less likely to be oxidized and has high weather resistance. Therefore, the metal powder of Ag is suitable as the electrically conductive particle.

In addition, the electrically conductive particles may be metal powder having a surface coated with Ag. When an Ag-coated metal powder is used, the metal powder is preferably Cu, Ni, Sn, Bi, or an alloy powder thereof. In order to make the metal of the base material inexpensive while maintaining the characteristics of Ag, it is preferable to use Ag-coated metal powder.

Further, the electrically conductive particles may be obtained by subjecting Cu or Ni to an antioxidant treatment. The electrically conductive particles may be metal powder obtained by coating the surface of the metal powder with Sn, Ni, or Cu. When a metal powder coated with Sn, Ni, or Cu is used, the metal powder is preferably Ag, Cu, Ni, Sn, Bi, or an alloy powder thereof.

The shape of the electrically conductive particles is not particularly limited. As the electrically conductive particle, a particle having a shape such as a spherical shape or a flat shape can be used, and it is preferable to use a mixture of a spherical metal powder and a flat metal powder.

The electrically conductive particles contained in the electrically conductive resin layer mainly ensure electrical conductivity of the electrically conductive resin layer. Specifically, when the plurality of electrically conductive particles are in contact with each other, an electrical conduction path is formed inside the electrically conductive resin layer.

The resin of the electrically conductive resin layer may contain at least one selected from various known thermosetting resins such as an epoxy resin, a phenol resin, a urethane resin, a silicone resin, and a polyimide resin. Among them, an epoxy resin excellent in heat resistance, moisture resistance, adhesion, and the like is one of the most suitable resins. The resin of the electrically conductive resin layer preferably contains a curing agent together with a thermosetting resin. When an epoxy resin is used as the base resin, the curing agent of the epoxy resin may be various known compounds such as phenol type, amine type, acid anhydride type, imidazole type, active ester type, and amide imide type.

The electrically conductive resin layer may include a plurality of layers. The thickness of the thickest portion of the electrically conductive resin layer is preferably 10 µm or more and 150 µm or less.

In addition, a first plated layer 60A and a second plated layer 60B described later may be directly provided on the multilayer body 10, without providing the first base electrode layer 50A and the second base electrode layer 50B. That is, the multilayer ceramic capacitor 1 may include a plated layer that is directly electrically connected to the first internal electrode layers 31 and the second internal electrode layers 32. In such a case, a plated layer may be provided after a catalyst is provided on the surface of the multilayer body 10 as a pretreatment.

Also in this case, the plated layer preferably includes a plurality of layers. Each of the lower plated layer and the upper plated layer preferably contains, for example, at least one metal selected from Cu, Ni, Sn, Pb, Au, Ag, Pd, Bi, and Zn, or an alloy containing these metals. The lower plated layer preferably includes Ni having solder barrier performance. The upper plated layer preferably includes Sn or Au, which have good solder wettability. In addition, for example, when the first internal electrode layer 31 and the second internal electrode layer 32 include Ni, the lower plated layer preferably includes Cu having good bonding property with Ni. In addition, the upper plated layer may be provided as necessary, and the external electrode 40 may include only the lower plated layer. The upper plated layer may function as the outermost layer, or another plated layer may be further provided on the surface of the upper plated layer.

The thickness per layer of the plated layer provided without the base electrode layer is preferably 2 µm or more and 10 µm or less. The plated layer preferably does not contain glass. The metal ratio per unit volume of the plated layer is preferably 99% by volume or more.

When the plated layer is directly provided on the multilayer body 10, the thickness of the base electrode layer can be reduced. Therefore, since the dimension of the multilayer ceramic capacitor 1 in the height direction T can be reduced by the amount of reducing the thickness of the base electrode layer, the height of the multilayer ceramic capacitor 1 can be reduced. Alternatively, the thickness of each of the dielectric layers 20 sandwiched between the first internal electrode layer 31 and the second internal electrode layer 32 can be increased by an amount corresponding to the reduction in the thickness of the base electrode layer, such that the thickness of the element body can be improved. As described above, by providing the plated layer directly on the multilayer body 10, it is possible to improve the degrees of freedom in designing the multilayer ceramic capacitor.

The above is the basic configuration of the multilayer ceramic capacitor 1 according to the embodiment. When the dimension in the length direction of the multilayer ceramic capacitor 1 including the multilayer body 10 and the external electrode 40 is defined as L, the L dimension is preferably 0.2 mm or more and 6 mm or less. When the dimension in the lamination direction of the multilayer ceramic capacitor 1 is defined as T, the T dimension is preferably 0.05 mm or more and 5 mm or less. When the dimension in the width direction of the multilayer ceramic capacitor 1 is defined as W, the W dimension is preferably 0.1 mm or more and 5 mm or less.

Here, the inventors of the present application have found, from intensive studies, experiments, and simulations, that it is desirable to set a coverage of the internal electrode layers to an appropriate state in order to improve the overall quality of the multilayer ceramic capacitor. This point will be described below. In multilayer ceramic capacitors, techniques for enhancing the coverage of each of the internal electrode layers in order to improve capacitance density have been studied. In addition, the coverage is also referred to as a coverage ratio of an internal electrode layer with respect to a dielectric layer. As a result of the above-described studies and the like, the inventors of the present application have found that an improvement in coverage also contributes to an improvement in connectivity between the internal electrode layers and the external electrodes. On the other hand, the inventors of the present application have also found that, if the coverage of the internal electrode layers is not appropriately set, residual stress increases due to a firing step at the time of manufacturing and stress due to an electrostrictive effect at the time of voltage application increases. When these stresses increase, the structure of the multilayer ceramic capacitor is likely to be broken.

FIG. 5A is an enlarged cross-sectional view schematically showing a portion indicated by R1 in FIG. 2. FIG. 5B is an enlarged cross-sectional view schematically showing a portion indicated by R2 in FIG. 2. Each of FIGS. 5A and 5B is a portion of the LT cross section. FIGS. 5A and 5B illustrate the dielectric layers 20, the first internal electrode layers 31, and the second internal electrode layers 32 in the multilayer body 10. FIGS. 5A and 5B respectively illustrate the first external electrode 40A and the second external electrode 40B.

Each of the first internal electrode layers 31 includes a first extension portion 31B having one end portion that extends toward and is exposed at the first end surface LS1 and connected to the first external electrode 40A, and a first counter portion 31A connected to the first extension portion 31B and opposed to the second internal electrode layer 32 provided adjacent to each other in the lamination direction T.

Each of the second internal electrode layers 32 includes a second extension portion 32B having one end portion that extends toward and is exposed at the second end surface LS2 and connected to the second external electrode 40B, and a second counter portion 32A connected to the second extension portion 32B and opposed to the first internal electrode layer 31 provided adjacent to each other in the lamination direction T.

The first extension portion 31B includes a first external electrode-side region 31BB located in the vicinity of a portion of the first extension portion connected with the first external electrode 40A, a first counter portion-side region 31BC located in the vicinity of a portion of the first extension portion connected with the first counter portions 31A, and a first intermediate region 31BA located between the first external electrode-side region 31BB and the first counter portion-side region 31BC.

The second extension portion 32B includes a second external electrode-side region 32BB located in the vicinity of a portion of the second extension portion connected with the second external electrode 40B, a second counter portion-side region 32BC located in the vicinity of a portion of the second extension portion connected with the second counter portions 32A, and a second intermediate region 32BA located between the second external electrode-side region 32BB and the second counter portion-side region 32BC.

It is preferable that the first intermediate region 31BA is located in the middle in the length direction of the first extension portion 31B and has a length of 60% or more and 80% or less of the length in the length direction L of the first extension portion 31B. It is preferable that the second intermediate region 32BA is located in the middle in the length direction of the second extension portion 32B and has a length of 60% or more and 80% or less of the length in the length direction L of the second extension portion 31B.

The coverage of the first intermediate region 31BA and the second intermediate region 32BA is lower than the coverage of the first external electrode-side region 31BB and the second external electrode-side region 32BB. The coverage of the first intermediate region 31BA and the second intermediate region 32BA is lower than the coverage of the first counter portion 31A and the second counter portion 32A. With such a configuration, it is possible to reduce stress concentration due to an electrostrictive effect at the time of voltage application, while maintaining a capacitance density and connectivity between internal electrode layers and external electrodes.

Further, the coverage of the first counter portion-side region 31BC and the second counter portion-side region 32BC is higher than the coverage of the first intermediate region 31BA and the second intermediate region 32BA. With such a configuration, it is possible to reduce stress concentration at the time of firing due to a difference in the linear expansion coefficient between the dielectric layers and the internal electrode layers in the vicinity of the connection portion between the counter portions and the extension portions of the internal electrode layers.

The coverage of the first intermediate region 31BA and the second intermediate region 32BA is preferably 55% or more. In manufacturing the multilayer ceramic capacitors 1 of the present embodiment, such a configuration is less likely to cause difficulty in processing.

The coverage of the first intermediate region 31BA and the second intermediate region 32BA is preferably 80% or less. With such a configuration, it is possible to further reduce the stress concentration due to the electrostriction effect at the time of voltage application.

The coverage of the first external electrode-side region 31BB and the second external electrode-side region 32BB is preferably higher than the coverage of the first intermediate region 31BA and the second intermediate region 32BA, and is 68% or more. With such a configuration, the connectivity with the external electrodes is more reliably maintained.

The coverage of the first external electrode-side region 31BB and the second external electrode-side region 32BB may be higher than the coverage of the first intermediate region 31BA and the second intermediate region 32BA, and may be 88% or less.

The coverage of the first counter portion-side region 31BC and the second counter portion-side region 32BC is preferably higher than the coverage of the first intermediate region 31BA and the second intermediate region 32BA, and is 68% or more. With such a configuration, it is possible to further reduce the stress concentration due to the electrostrictive effect at the time of voltage application, and further, it is possible to further reduce the stress concentration at the time of firing due to the difference in the linear expansion coefficient between the dielectric layers and the internal electrode layers.

The coverage of the first counter portion-side region 31BC and the second counter portion-side region 32BC may be higher than the coverage of the first intermediate region 31BA and the second intermediate region 32BA, and may be 88% or less.

The coverage of the first counter portion 31A and the second counter portion 32A is preferably higher than the coverage of the first intermediate region 31BA and the second intermediate region 32BA, and is 75% or more. With such a configuration, it is possible to achieve the advantageous effect of the present embodiment, while ensuring the capacitance density.

The coverage of the first counter portion 31A and the second counter portion 32A may be higher than the coverage of the first intermediate region 31BA and the second intermediate region 32BA, and may be 88% or less.

The coverage of the first intermediate region 31BA and the second intermediate region 32BA is preferably about 60% or more and about 90% or less, and more preferably about 60% or more and about 83% or less of the coverage of the first external electrode-side region 31BB and the second external electrode-side region 32BB.

The coverage of the first intermediate region 31BA and the second intermediate region 32BA is preferably about 60% or more and about 90% or less, and more preferably about 60% or more and about 83% or less of the coverage of the first counter portion-side region 31BC and the second counter portion-side region 32BC.

The coverage of the first intermediate region 31BA and the second intermediate region 32BA is preferably about 60% or more and 90% or less, and more preferably about 60% or more and 83% or less of the coverage of the first counter portion 31A and the second counter portion 32A.

Even when the coverage of the first intermediate region 31BA and the second intermediate region 32BA is reduced more than necessary, the advantageous effect of reducing the stress concentration due to the electrostriction effect at the time of voltage application is limited. In addition, when the coverage of the first intermediate region 31BA and the second intermediate region 32BA are excessively reduced, the balance is lost and residual stress may be generated. Within the above range, it is possible to achieve the advantageous effect of the present embodiment appropriately.

The coverage of the first external electrode-side region 31BB, the coverage of the first counter portion-side region 31BC, and the coverage of the first counter portion 31A are preferably the same or substantially the same. The coverage of the second external electrode-side region 32BB, the coverage of the second counter portion-side region 32BC, and the coverage of the second counter portion 32A are preferably the same or substantially the same. With such a configuration, a situation in which the balance of the whole is lost and residual stress is generated is less likely to occur.

According to the multilayer ceramic capacitor 1 of the present embodiment, it is possible to reduce the stress concentration due to the electrostrictive effect at the time of voltage application, while maintaining the capacitance density and maintaining the connectivity between the internal electrode layers and the external electrodes, and further, it is possible to reduce the stress concentration at the time of firing due to the difference in the linear expansion coefficient between the dielectric layers and the internal electrode layers.

### Second Embodiment

Hereinafter, a multilayer ceramic capacitor 1 according to a second embodiment will be described. In the following description, the same components as those of the first embodiment are denoted by the same reference numerals, and detailed descriptions thereof will be omitted. FIG. 6A is an enlarged cross-sectional view schematically showing a portion indicated by R1 in FIG. 2 in the multilayer ceramic capacitor 1 according to the second embodiment. FIG. 6B is an enlarged cross-sectional view schematically showing a portion indicated by R2 in FIG. 2 in the multilayer ceramic capacitor 1 according to the second embodiment. Each of FIGS. 6A and 6B is a portion of the LT cross section. FIGS. 6A and 6B show the dielectric layers 20, the first internal electrode layers 31, and the second internal electrode layers 32 in the multilayer body 10, and the first external electrode 40A and the second external electrode 40B.

In the present embodiment, the coverage of the first counter portion-side region 31BC is the same or substantially the same as the coverage of the first intermediate region 31BA, and the coverage of the second counter portion-side region 32BC is the same or substantially the same as the coverage of the second intermediate region 32BA. Even with such a configuration, although there is a possibility that stress may be generated more than in the first embodiment, it is possible to reduce stress concentration due to an electrostrictive effect at the time of voltage application and to reduce stress concentration at the time of firing due to the difference in the linear expansion coefficient between the dielectric layers and the internal electrode layers, while maintaining the capacitance density and maintaining the connectivity between the internal electrode layers and the external electrodes.

Next, a method of measuring a coverage as the coverage ratio of the internal electrode layer 30 with respect to the dielectric layer 20 in each embodiment will be described.

First, the internal electrode layer 30 and the dielectric layer 20 located in the middle in the lamination direction T of the multilayer body 10 are peeled off by electric field peeling to expose the internal electrode layers 30. Next, each region (regions 31A, 31BA, 31BB, 31BC, 32A, 32BA, 32BB, and 32BC) of the internal electrode layer 30 is set as a measurement target range, and laser microscope observation is performed. Here, the measurement target range is set in a range of 25 µm × 25 µm, for example. When the first internal electrode layer 31 is exposed, first, each region (regions 31A, 31BA, 31BB, and 31BC) of the first internal electrode layer 31 is set as a measurement target range, and laser microscope observation is performed. Thereafter, the second internal electrode layer 32 is exposed by FIB (focused ion beam) processing. Then, each region (regions 32A, 32BA, 32BB, and 32BC) of the second internal electrode layer 32 is set as the above-described measurement target range, and the laser microscope observation is performed. After the laser microscope observation, the first internal electrode layer 31 may be observed with a laser microscope.

Thereafter, the regions of the internal electrode layer 30 in the measurement target range are identified by analysis of the laser microscope image. Thereafter, based on the area of the analysis target range and the area of the region of the internal electrode layer 30, the coverage ratio of the internal electrode layer 30 with respect to the dielectric layer 20 is calculated by the following equation (1). Coverage (%) = (area of internal electrode layer/area of analysis target range) × 100 (1)

The coverage of the intermediate region is calculated by the average value of the value of the first intermediate region 31BA and the value of the second intermediate region 32BA. The coverage of the first intermediate region 31BA and the second intermediate region 32BA is measured at the middle position in the width direction W and the length direction L of the extension portion.

The coverage of the external electrode-side region is calculated by the average value of the value of the first external electrode-side region 31BB and the value of the second external electrode-side region 32BB. The coverage of the first external electrode-side region 31BB and the second external electrode-side region 32BB are measured at the middle position in the width direction W and at a position 7% of the length of the extension portion in the length direction L from the end surface of the multilayer body toward the center of the multilayer body.

The coverage of the counter portion-side region is calculated by the average value of the value of the first counter portion-side region 31BC and the value of the second counter portion-side region 32BC. The coverage of the first counter portion-side region 31BC and the second counter portion-side region 32BC is measured at the middle position in the width direction W at a position 7% of the length of the extension portion in the length direction L toward the end surface of the multilayer body from the boundary position between the counter portion and the extension portion.

The coverage of the counter portion is calculated from the average value of the value of the first counter portion 31A of the first internal electrode layer 31 and the value of the second counter portion 32A of the second internal electrode layer 32. The coverage of the first counter portion 31A and the second counter portion 32A are measured at the middle position in the width direction W and the length direction L of the counter portion.

Next, a method of manufacturing the multilayer ceramic capacitor 1 of the present embodiment will be described. The manufacturing method of the multilayer ceramic capacitor 1 of the present embodiment is not limited as long as the requirements described above are satisfied. However, a preferred manufacturing method includes the following steps. Details of each step will be described below.

A dielectric sheet for manufacturing the dielectric layers 20 and an electrically conductive paste for manufacturing the internal electrode layers 30 are prepared. The dielectric sheet for manufacturing the dielectric layers 20 and the electrically conductive paste for manufacturing the internal electrode layers 30 both contain a binder and a solvent. The binder and the solvent may be known. The paste made of an electrically conductive material is, for example, a paste obtained by adding an organic binder and an organic solvent to a metal powder.

The electrically conductive paste for manufacturing the internal electrode layers 30 is printed on the dielectric sheet by, for example, screen printing, gravure printing, or the like using a printing plate whose pattern is designed to have the shape of the internal electrode layer 30 of the present embodiment. Thus, the dielectric sheet on which the pattern of the first internal electrode layer 31 is provided and the dielectric sheet on which the pattern of the second internal electrode layer 32 is provided are prepared. At this time, the coverage of each region of the internal electrode layers is adjusted to a desired value by adjusting the thickness of the electrically conductive paste applied to the portion where the coverage is desired to be adjusted.

By laminating a predetermined number of dielectric sheets on which the pattern of the internal electrode layer 30 is not printed, a portion functioning as the first main surface-side outer layer portion 12 adjacent to the first main surface TS1 is formed. Dielectric sheets on each of which the pattern of the first internal electrode layer 31 is printed and dielectric sheets on each of which the pattern of the second internal electrode layer 32 is printed are sequentially and alternately laminated thereon to form a portion functioning as the inner layer portion 11. A predetermined number of dielectric sheets on each of which the pattern of the internal electrode layer 30 is not printed are laminated on the portion functioning as the inner layer portion 11 to form a portion functioning as the second main surface-side outer layer portion 13 adjacent to the second main surface TS2. Thus, a multilayer sheet is obtained.

The multilayer sheet is then pressed in the lamination direction by means such as an isostatic press to create a multilayer block.

Then, the multilayer block is cut into pieces each having a predetermined size to obtain a plurality of multilayer chips. Thereafter, the multilayer chips may be polished by barrel polishing or the like to round the corner portions and the ridge line portions.

Next, the multilayer chips are each fired to obtain the multilayer body 10. The firing temperature at this time depends on the materials of the dielectric layers 20 and the internal electrode layers 30, but is preferably 900°C or more and 1400°C or less, for example.

An electrically conductive paste functioning as the base electrode layer 50 is applied to both end surfaces of the multilayer body 10. In the present embodiment, the base electrode layer 50 is a fired layer. The fired layer can be formed by applying an electrically conductive paste containing a glass component and a metal to the multilayer body 10 by a method such as dipping, and then performing a firing treatment. The temperature of the firing treatment at this time is preferably 700°C or more and 900°C or less.

The multilayer chip before firing and the electrically conductive paste applied to the multilayer chip may be fired at the same time. In this case, the fired layer is preferably formed by firing a material to which a ceramic material is added instead of a glass component. At this time, it is particularly preferable to use the same type of ceramic material as the dielectric layer 20 as the ceramic material to be added. In this case, an electrically conductive paste is applied to the multilayer chip before firing, and the multilayer chip and the electrically conductive paste applied to the multilayer chip are simultaneously fired to form the multilayer body 10 in which the fired layer is formed.

Thereafter, a plated layer is formed on the surface of the base electrode layer 50 including the fired layer. In the present embodiment, the first plated layer 60A is formed on the surface of the first base electrode layer 50A. The second plated layer 60B is formed on the surface of the second base electrode layer 50B. In the present embodiment, a Ni plated layer and a Sn plated layer are formed as the plated layers. When plating is performed, either electrolytic plating or electroless plating may be employed. However, electroless plating requires pretreatment with a catalyst or the like in order to improve the plating deposition rate, and thus has a disadvantage in that the process becomes complicated. Therefore, in general, electrolytic plating is preferably employed. The Ni plated layer and the Sn plated layer are sequentially formed by barrel plating, for example.

When the base electrode layer is formed with a thin film layer, masking or the like is performed to form a thin film layer functioning as the base electrode layer in a portion where the external electrode is to be formed. The thin film layer is formed by a thin film forming method such as sputtering or vapor deposition. The thin film layer is, for example, a layer of 10 µm or less on which metal particles are deposited.

When the electrically conductive resin layer is provided, the electrically conductive resin layer may cover the fired layer. When the electrically conductive resin layer is provided, an electrically conductive resin paste containing a thermosetting resin and a metal component is applied onto the fired layer, and then heat treatment is performed at a temperature of 250°C to 550°C or higher. Thus, the thermosetting resin is thermally cured to form the electrically conductive resin layer. The atmosphere during this heat treatment is preferably an N₂ atmosphere. In addition, in order to prevent scattering of the resin and oxidation of various metal components, the oxygen concentration is preferably 100 ppm or less.

The plated layer may be directly provided on the exposed portion of the internal electrode layer 30 of the multilayer body 10 without providing the base electrode layer. In this case, plating is performed on the first end surface LS1 and the second end surface LS2 of the multilayer body 10 such that a plated layer is formed on each of the exposed portions of the internal electrode layers 30. When plating is performed, either electrolytic plating or electroless plating may be employed. However, electroless plating requires pretreatment with a catalyst or the like in order to improve the plating deposition rate, and thus has a disadvantage in that the process becomes complicated. Therefore, in general, electrolytic plating is preferably employed. As the plating method, barrel plating is preferably employed. If necessary, an upper plated layer to be formed on the surface of the lower plated layer may be formed by the same method as the lower plated layer.

Through the above manufacturing steps, the multilayer ceramic capacitors 1 are manufactured.

The multilayer ceramic capacitors 1 according to the embodiment described above achieve the following advantageous effects.

(1) The multilayer ceramic capacitor 1 includes the multilayer body 10 including the plurality of dielectric layers 20 and the plurality of internal electrode layers 30 that are laminated, the first main surface TS1 and the second main surface TS2 opposed to each other in the lamination direction T, the first lateral surface WS1 and the second lateral surface WS2 opposed to each other in the width direction W orthogonal or substantially orthogonal to the lamination direction T, and the first end surface LS1 and the second end surface LS2 opposed to each other in the length direction L orthogonal or substantially orthogonal to the lamination direction T and the width direction W; the first external electrode 40A on the first end surface; and the second external electrode 40B on the second end surface. The plurality of internal electrode layers 30 include the first internal electrode layers 31 and the second internal electrode layers 32. The first internal electrode layers 31 each include the first extension portion 31B and the first counter portion 31A. The first extension portion 31B includes one end portion that extends toward and is exposed at the first end surface LS1 and is connected to the first external electrode 40A. The first counter portion 31A is connected to the first extension portion 31B and opposed to a corresponding one of the second internal electrode layers 32 provided adjacent to each other in the lamination direction T. The second internal electrode layers 32 each include the second extension portion 32B and the second counter portion 32A. The second extension portion 32B includes one end portion that extends toward and is exposed at the second end surface LS2 and is connected to the second external electrode 40B. The second counter portion is connected to the second extension portion 32B and opposed to a corresponding one of the first internal electrode layers 31 provided adjacent to each other in the lamination direction T. The first extension portion 31B includes the first external electrode-side region 31BB in the vicinity of the portion of the first extension portion connected with the first external electrode 40A, the first counter portion-side region 31BC in the vicinity of the portion of the first extension portion connected with the first counter portions 31A, and the first intermediate region 31BA located between the first external electrode-side region 31BB and the first counter portion-side region 31BC. The second extension portion 32B includes the second external electrode-side region 32BB in the vicinity of the portion of the second extension portion connected with the second external electrode 40B, the second counter portion-side region 32BC in the vicinity of the portion of the second extension portion connected with the second counter portions 32A, and the second intermediate region 32BA located between the second external electrode-side region 32BB and the second counter portion-side region 32BC. The coverage of the first intermediate region 31BA and the second intermediate region 32BA is lower than the coverage of the first external electrode-side region 31BB and the second external electrode-side region 32BB. The coverage of the first intermediate region 31BA and the second intermediate region 32BA is lower than the coverage of the first counter portion 31A and the second counter portion 32A.

With such a configuration, it is possible to reduce stress concentration due to an electrostrictive effect at the time of voltage application, while maintaining the capacitance density and maintaining the connectivity between the internal electrode layers and the external electrodes.

(2) In the multilayer ceramic capacitor 1 according to (1) above, the coverage of the first counter portion-side region 31BC and the second counter portion-side region 32BC is higher than the coverage of the first intermediate region 31BA and the second intermediate region 32BA.

With such a configuration, it is possible to reduce stress concentration at the time of firing due to the difference in the linear expansion coefficient between the dielectric layers and the internal electrode layers in the vicinity of the connection portion between the counter portion and the extension portion of the internal electrode layer.

(3) In the multilayer ceramic capacitor 1 according to (1) or (2) above, the coverage of the first intermediate region 31BA and the second intermediate region 32BA is 55% or more.

In manufacturing the multilayer ceramic capacitors 1 of the present embodiment, such a configuration is less likely to cause difficulty in processing.

(4) In the multilayer ceramic capacitor 1 according to any one of (1) to (3) above, the coverage of the first intermediate region 31BA and the second intermediate region 32BA is 80% or less.

With such a configuration, it is possible to further reduce stress concentration due to the electrostrictive effect at the time of voltage application.

(5) In the multilayer ceramic capacitor 1 according to any one of (1) to (4) above, the coverage of the first external electrode-side region 31BB and the second external electrode-side region 32BB is higher than the coverage of the first intermediate region 31BA and the second intermediate region 32BA, and are each 68% or more.

With such a configuration, the connectivity with the external electrode is more reliably maintained.

(6) In the multilayer ceramic capacitor 1 according to any one of (1) to (5) above, the coverage of the first counter portion-side region 31BC and the second counter portion-side region 32BC is higher than the coverage of the first intermediate region 31BA and the second intermediate region 32BA, and is 68% or more.

With such a configuration, it is possible to further reduce the stress concentration due to the electrostrictive effect at the time of voltage application, and it is possible to further reduce the stress concentration at the time of firing due to the difference in the linear expansion coefficient between the dielectric layers and the internal electrode layers.

(7) In the multilayer ceramic capacitor 1 according to any one of (1) to (6) above, the coverage of the first counter portion 31A and the second counter portion 32A is higher than the coverage of the first intermediate region 31BA and the second intermediate region 32BA, and is 75% or more.

With such a configuration, it is possible to achieve the advantageous effects of the present embodiment while ensuring the capacitance density. Experimental Example

### Sample Preparation

According to the manufacturing method described in the embodiment, a plurality of lots including multilayer ceramic capacitors manufactured by adjusting the coverage of each region of the internal electrode layers were manufactured as samples of each lot. Thereafter, the prepared samples were used to evaluate the breakdown occurrence voltage due to electrostriction, the occurrence of cracks, and the connectivity between the internal electrodes and the external electrodes.

First, according to the manufacturing method described in the present embodiment, multilayer ceramic capacitors having the following specifications were manufactured as samples of the Example.

- Dimensions of a multilayer ceramic capacitor: L × W × T = 3.2 mm × 2.5 mm × 2.5 mm
   - Capacitance: 2.2 µF
   - Rated voltage: 100 V
   - Dielectric layer: BaTiO₃
   - Thickness of dielectric layer: 1 µm
   - Internal electrode layer: Ni
   - Base electrode layer: electrode containing electrically conductive metal (Cu) and glass component
   - Plated layer: two-layer structure of Ni plated layer of 2 µm and Sn plated layer of 2 µm
   - Length in the L direction of the extension portion (end surface-side outer layer portion (L gap)) of the internal electrode: 220 µm

Here, each lot is a lot manufactured under different manufacturing conditions, and the coverage of each region of the internal electrode layers is adjusted. In the Experimental Example, the thickness of each of the internal electrode layers was adjusted to be in the range of 0.5 µm to 1 µm, and the coverage of each region was adjusted. For each of Examples and Comparative Examples, a required number of samples to be used for each evaluation were prepared. In addition, five samples for coverage measurement were prepared for each of the Examples and Comparative Examples, and an average value of measured values of coverage of the five samples was calculated as a value of coverage of each of the Examples and Comparative Examples. However, in the region where the electrically conductive paste for manufacturing the internal electrode layer was applied to have the reference application thickness in the present experimental example, the coverage was described as 88% based on the accumulation of the evaluation results.

### Evaluation of Breakdown Occurrence Voltage by Electrostriction

The breakdown occurrence voltage of each of the multilayer ceramic capacitors varies depending on the degree of occurrence of electrostriction. Therefore, the electrostriction was evaluated by a BVD apparatus for measuring the breakdown voltage (BVD). First, the external electrode of each of the samples of the multilayer ceramic capacitors was placed on the electrode of the BDV measuring apparatus. Next, application of a voltage was started under the conditions of an initial voltage: 0 V, boost rate: 100 V/sec, and a detection current (setting of a current value determined as failure): 10 mA, at room temperature. Then, the voltage immediately before exceeding the detection current was recorded, and this value was defined as an electrostrictive breakdown occurrence voltage. For each of the Examples and Comparative Examples, 20 samples were evaluated, and the average value thereof was defined as the electrostrictive breakdown occurrence voltage of each of the Examples and Comparative Examples.

### Evaluation of Occurrence of Cracks

In the evaluation of the occurrence of cracks due to the influence of residual stress at the time of firing of the multilayer ceramic capacitors, 100 multilayer ceramic capacitors for each lot were manufactured and evaluation was carried out for each of them. The presence or absence of the occurrence of cracks was confirmed by exposing a WT cross section passing through the center of the multilayer body by polishing, and then observing the exposed cross section with an optical microscope. Samples in which the occurrence of cracks was confirmed were counted as samples in which cracks occurred (failure).

### Evaluation of Connectivity of Internal Electrode and External Electrode

In the evaluation of the connectivity between the internal electrodes and the external electrodes, 100 multilayer ceramic capacitors for each lot were manufactured. The 100 samples were subjected to a rapid discharge test in which a short circuit was caused in each immediately after a rated voltage of 100 V was applied. Thereafter, the capacitance was measured, and the rate of decrease from the capacitance value before the rapid discharge test was determined. At this time, samples in which the rate of decrease was 5% or more were counted as samples (failure) in which a connection failure occurred, i.e., samples in which a disconnection occurred to some extent at the connection portion between the internal electrode and the external electrode by the rapid discharge test. Experimental Example 1

As Experimental Example 1, an experiment was performed to evaluate a sample in which the coverage of the intermediate region of the extension portion of the internal electrode layer was applied. As shown in Table 1, the samples of Examples 1 to 5 were samples in which the coverage of the first intermediate region 31BA and the second intermediate region 32BA was lower than the coverage of the first external electrode-side region 31BB and the second external electrode-side region 32BB, and the coverage of the first intermediate region 31BA and the second intermediate region 32BA was lower than the coverage of the first counter portion 31A and the second counter portion 32A. The coverage of the intermediate region of each of the samples of Examples 1 to 5 was 80%, 73%, 62%, 55%, and 41%, and the coverage of the other regions was 88%. In addition, it was difficult to manufacture samples in which only the coverage of the intermediate region was less than 41% in terms of processing. As the samples of Comparative Examples 1 and 2 to be compared, samples having uniform coverage of the counter portion and the extension portion were prepared.

**[Table 1]**

| | | Comparative Example 1 | Comparative Example 2 | Example 1 | Example 2 | Example 3 | Example 4 | Example 5 |
|---|---|---|---|---|---|---|---|---|
| COVERAGE | INTERMEDIATE REGION OF EXTENSION PORTION 31BA, 32BA | 62% | 88% | 80% | 73% | 62% | 55% | 41% |
| | EXTERNAL ELECTRODE-SIDE REGION OF EXTENSION PORTION 31BB, 32BB | | | 88% | 88% | 88% | 88% | 88% |
| | COUNTER PORTION-SIDE REGION OF EXTENSION PORTION 31BC, 32BC | | | 88% | 88% | 88% | 88% | 88% |
| | COUNTER PORTION 31A, 32A | | | 88% | 88% | 88% | 88% | 88% |
| EVALUATION RESULT | ELECTROSTRICTIVE BREAKDOWN OCCURRENCE VOLTAGE (ELECTROSTRICTIVE INFLUENCE) | 646 V | 571 V | 649 V | 657 V | 665 V | 663 V | 662 V |
| | OCCURRENCE RATE OF CRACKS (INFLUENCE OF RESIDUAL STRESS AT THE TIME OF FIRING) | 12/100 | 2/100 | 0/100 | 0/100 | 0/100 | 0/100 | 1/100 |
| | OCCURRENCE RATE OF CONNECTION FAILURE (CONNECTIVITY WITH EXTERNAL ELECTRODE) | 5/100 | 0/100 | 0/100 | 0/100 | 0/100 | 0/100 | 0/100 |

As shown in Table 1, in the evaluation of the breakdown occurrence voltage due to electrostriction, the electrostrictive breakdown occurrence voltages of Examples 1 to 5, each having coverage of the intermediate region lower than the coverage of the external electrode-side region and the coverage of the counter portion were higher than the electrostrictive breakdown voltage of Comparative Example 2 in which the coverage of the counter portion and the extension portion was uniform.

In the evaluation of the connectivity between the internal electrode and the external electrode, connection failure did not occur in each of Examples 1 to 5. On the other hand, in Comparative Example 1, connection failure occurred.

In the evaluation of the occurrence of cracks, cracks did not occur in each of Examples 1 to 4. Also in Example 5, the occurrence rate of cracks was extremely low. On the other hand, the crack occurrence rate of Comparative Example 2 was higher than those of Examples.

In Comparative Example 1 in which the coverage of the counter portion was lower than those in Examples 1 to 5, it is considered that the capacitance density was lower than those in Examples 1 to 5.

From the above results, it was confirmed that, with the multilayer ceramic capacitors of Examples 1 to 5 in which the coverage of the intermediate region is lower than the coverage of the external electrode-side region and the coverage of the counter portion, it is possible to reduce stress concentration due to the electrostrictive effect at the time of voltage application, while maintaining the capacitance density and maintaining the connectivity between the inner electrode layers and the external electrodes. The coverage of the intermediate region is preferably 41% or more, and more preferably 55% or more. The coverage of the intermediate region may be 41% or more and 88% or less, or 55% or more and 88% or less. In addition, when the coverage including the coverage of the intermediate region was high as compared to Comparative Example 2, the electrostrictive breakdown occurrence voltage tended to be low. In addition, when the coverage of the intermediate region was too low, residual stress during firing tended to occur. Experimental Example 2

As Experimental Example 2, an experiment was performed to evaluate a sample in which the coverage of the external electrode-side region of the extension portion of the internal electrode layer was applied. As shown in Table 2, the samples of Examples 1 to 3 were samples in which the coverage of the first intermediate region 31BA and the second intermediate region 32BA was lower than the coverage of the first external electrode-side region 31BB and the second external electrode-side region 32BB, and the coverage of the first intermediate region 31BA and the second intermediate region 32BA was lower than the coverage of the first counter portion 31A and the second counter portion 32A. The coverage of the intermediate regions of each of the samples of Examples 1 to 3 was 62%, and the coverage of the external electrode-side region was 88%, 74%, and 68%. In the sample of Comparative Example 1, the coverage of the external electrode-side region was 60%, and the coverage of the first external electrode-side region 31BB and the second external electrode-side region 32BB was lower than the coverage of the first intermediate region 31BA and the second intermediate region 32BA.

**[Table 2]**

| | | Example 1 | Example 2 | Example 3 | Example 4 |
|---|---|---|---|---|---|
| COVERAGE | INTERMEDIATE REGION OF EXTENSION PORTION 31BA, 32BA | 62% | 62% | 62% | 62% |
| | EXTERNAL ELECTRODE-SIDE REGION OF EXTENSION PORTION 31BB, 32BB | 88% | 74% | 68% | 60% |
| | COUNTER PORTION-SIDE REGION OF EXTENSION PORTION 31BC, 32BC | 88% | 88% | 88% | 88% |
| | COUNTER PORTION 31A, 32A | 88% | 88% | 88% | 88% |
| EVALUATION RESULT | ELECTROSTRICTIVE BREAKDOWN OCCURRENCE VOLTAGE (ELECTROSTRICTIVE INFLUENCE) | 665 V | 662 V | 662 V | 661 V |
| | OCCURRENCE RATE OF CRACKS (INFLUENCE OF RESIDUAL STRESS AT THE TIME OF FIRING) | 0/100 | 0/100 | 0/100 | 0/100 |
| | OCCURRENCE RATE OF CONNECTION FAILURE (CONNECTIVITY WITH EXTERNAL ELECTRODE) | 0/100 | 0/100 | 0/100 | 5/100 |

As shown in Table 2, in the evaluation of the breakdown occurence voltage due to the electrostriction and the evaluation of occurrence of cracks, all of Examples 1to 3 and Comparative Example 1 showed good results.

However, in the evaluation of the connectivity between the internal electrodes and the external electrodes, good results were obtained in Examples 1 to 3, while connection failure occurred in Comparative Example 1.

From the above results, it was confirmed that, with the multilayer ceramic capacitors of Examples 1 to 3 in which the coverage of the intermediate region is lower than the coverage of the external electrode-side region and the coverage of the counter portion, it is possible to reduce stress concentration due to the electrostrictive effect at the time of voltage application, while maintaining the capacitance density and maintaining the connectivity between the inner electrode layers and the external electrodes. The coverage of the external electrode-side region is preferably higher than the coverage of the intermediate region and is 68% or more. Experimental Example 3

As Experimental Example 3, an experiment was performed to evaluate a sample in which the coverage of the counter portion-side region of the extension portion of the internal electrode layer was applied. As shown in Table 3, the samples of Examples 1 to 4 are samples in which the coverage of the first intermediate region 31BA and the second intermediate region 32BA was lower than the coverage of the first external electrode-side region 31BB and the second external electrode-side region 32BB, and the coverage of the first intermediate region 31BA and the second intermediate region 32BA was lower than the coverage of the first counter portion 31A and the second counter portion 32A. The coverage of the intermediate regions of each of the samples of Examples 1 to 4 was 62%, and the coverage of the counter portion-side region was 88%, 75%, 68%, and 64%.

**[Table 3]**

| | | Example 1 | Example 2 | Example 3 | Example 4 |
|---|---|---|---|---|---|
| COVERAGE | INTERMEDIATE REGION OF EXTENSION PORTION 31BA, 32BA | 62% | 62% | 62% | 62% |
| | EXTERNAL ELECTRODE-SIDE REGION OF EXTENSION PORTION 31BB, 32BB | 88% | 88% | 88% | 88% |
| | COUNTER PORTION-SIDE REGION OF EXTENSION PORTION 31BC, 32BC | 88% | 75% | 68% | 64% |
| | COUNTER PORTION 31A, 32A | 88% | 88% | 88% | 88% |
| EVALUATION RESULT | ELECTROSTRICTIVE BREAKDOWN OCCURRENCE VOLTAGE (ELECTROSTRICTIVE INFLUENCE) | 665 V | 662 V | 657 V | 646 V |
| | OCCURRENCE RATE OF CRACKS (INFLUENCE OF RESIDUAL STRESS AT THE TIME OF FIRING) | 0/100 | 0/100 | 0/100 | 2/100 |
| | OCCURRENCE RATE OF CONNECTION FAILURE (CONNECTIVITY WITH EXTERNAL ELECTRODE) | 0/100 | 0/100 | 0/100 | 0/100 |

As shown in Table 3, in the evaluation of the breakdown occurence voltage due to the electrostriction and the evaluation of the connectivity between the internal electrodes and the external electrodes, all of Examples 1 to 4 showed good results.

In the evaluation of occurrence of cracks, cracks did not occur in each of Examples 1 to 3. Also in Example 4, the occurrence rate of cracks was extremely low.

From the above results, it was confirmed that, with the multilayer ceramic capacitors of Examples 1 to 4 in which the coverage of the intermediate region is lower than the coverage of the external electrode-side region and the coverage of the counter portion, it is possible to reduce stress concentration due to the electrostrictive effect at the time of voltage application, while maintaining the capacitance density and maintaining the connectivity between the inner electrode layers and the external electrodes. The coverage of the counter portion-side region is higher than the coverage of the intermediate region, and is preferably 64% or more, and more preferably 68% or more. When the coverage of the counter portion-side region was lowered, residual stress during firing tended to occur. Experimental Example 4

As Experimental Example 4, an experiment was performed to evaluate a sample in which the coverage of the counter portion of the internal electrode layer was applied. As shown in Table 4, the samples of Examples 1 to 3 are samples in which the coverage of the first intermediate region 31BA and the second intermediate region 32BA was lower than the coverage of the first external electrode-side region 31BB and the second external electrode-side region 32BB, and the coverage of the first intermediate region 31BA and the second intermediate region 32BA was lower than the coverage of the first counter portion 31A and the second counter portion 32A. The coverage of the intermediate regions of each of the samples of Examples 1 to 3 was 62%, and the coverage of the counter portion was 88%, 75%, and 71%.

**[Table 4]**

| | | Example 1 | Example 2 | Example 3 |
|---|---|---|---|---|
| COVERAGE | INTERMEDIATE REGION OF EXTENSION PORTION 31BA, 32BA | 62% | 62% | 62% |
| | EXTERNAL ELECTRODE-SIDE REGION OF EXTENSION PORTION 31BB, 32BB | 88% | 88% | 88% |
| | COUNTER PORTION-SIDE REGION OF EXTENSION PORTION 31BC, 32BC | 88% | 88% | 88% |
| | COUNTER PORTION 31A, 32A | 88% | 75% | 71% |
| EVALUATION RESULT | ELECTROSTRICTIVE BREAKDOWN OCCURRENCE VOLTAGE (ELECTROSTRICTIVE INFLUENCE) | 665 V | 662 V | 649 V |
| | OCCURRENCE RATE OF CRACKS (INFLUENCE OF RESIDUAL STRESS AT THE TIME OF FIRING) | 0/100 | 0/100 | 2/100 |
| | OCCURRENCE RATE OF CONNECTION FAILURE (CONNECTIVITY WITH EXTERNAL ELECTRODE) | 0/100 | 0/100 | 0/100 |

As shown in Table 4, in the evaluation of the breakdown voltage due to the electrostriction and the evaluation of the connectivity between the internal electrodes and the external electrodes, all of Examples 1 to 3 showed good results

In the evaluation of occurrence of cracks, cracks did not occur in each of Examples 1 and 2. Also in Example 3, the occurrence rate of cracks was extremely low

From the above results, it is confirmed that, with the multilayer ceramic capacitors of Examples 1 to 3 in each of which the coverage of the intermediate region is lower than the coverage of the external electrode-side region and the coverage of the counter portion, it is possible to reduce stress concentration due to the electrostrictive effect at the time of voltage application while maintaining the capacitance density and maintaining the connectivity between the inner electrode layers and the external electrodes. The coverage of the counter portion is higher than the coverage of the intermediate region, and is preferably 71% or more, and more preferably 75% or more. When the coverage of the counter portion was lowered, residual stress during firing tended to occur.

Although embodiments of the present invention have been described above, the present invention is not limited to the embodiments, and can be implemented in various modes without departing from the gist of the present invention. The present invention includes the following combinations.
<1> A multilayer ceramic capacitor includes: a multilayer body including a plurality of dielectric layers and a plurality of internal electrode layers that are laminated, a first main surface and a second main surface opposed to each other in a lamination direction, a first lateral surface and a second lateral surface opposed to each other in a width direction orthogonal or substantially orthogonal to the lamination direction, and a first end surface and a second end surface opposed to each other in a length direction orthogonal or substantially orthogonal to the lamination direction and the width direction; a first external electrode on the first end surface; and a second external electrode on the second end surface, in which the plurality of internal electrode layers include first internal electrode layers and second internal electrode layers; the first internal electrode layers each include a first extension portion and a first counter portion, the first extension portion including one end portion that extends toward and is exposed at the first end surface and is connected to the first external electrode, the first counter portion being connected to the first extension portion and opposed to a corresponding one of the second internal electrode layers provided adjacent to each other in the lamination direction; the second internal electrode layers each include a second extension portion and a second counter portion, the second extension portion including one end portion that extends toward and is exposed at the second end surface and is connected to the second external electrode, the second counter portion being connected to the second extension portion and opposed to a corresponding one of the first internal electrode layers provided adjacent to each other in the lamination direction; the first extension portion includes a first external electrode-side region in a vicinity of a portion of the first extension portion connected with the first external electrode, a first counter portion-side region in a vicinity of a portion of the first extension portion connected with the first counter portions, and a first intermediate region located between the first external electrode-side region and the first counter portion-side region; the second extension portion includes a second external electrode-side region in a vicinity of a portion of the second extension portion connected with the second external electrode, a second counter portion-side region in a vicinity of a portion of the second extension portion connected with the second counter portions, and a second intermediate region located between the second external electrode-side region and the second counter portion-side region; a coverage of the first intermediate region and the second intermediate region is lower than a coverage of the first external electrode-side region and the second external electrode-side region; and the coverage of the first intermediate region and the second intermediate region is lower than a coverage of the first counter portion and the second counter portion.
<2> In the multilayer ceramic capacitor according to <1> above, a coverage of the first counter portion-side region and the second counter portion-side region is higher than the coverage of the first intermediate region and the second intermediate region.
<3> In the multilayer ceramic capacitor according to <1> or <2> above, the coverage of the first intermediate region and the second intermediate region is 55% or more.
<4> In the multilayer ceramic capacitor according to any one of <1> to <3> above, the coverage of the first intermediate region and the second intermediate region is 80% or less.
<5> In the multilayer ceramic capacitor according to any one of <1> to <4> above, the coverage of the first external electrode-side region and the second external electrode-side region is higher than the coverage of the first intermediate region and the second intermediate region, and is 68% or more.
<6> In the multilayer ceramic capacitor according to any one of <1> to <5> above, the coverage of the first counter portion-side region and the second counter portion-side region is higher than the coverage of the first intermediate region and the second intermediate region, and is 68% or more.
<7> In the multilayer ceramic capacitor according to any one of <1> to <6> above, the coverage of the first counter portion and the second counter portion is higher than the coverage of the first intermediate region and the second intermediate region, and is 75% or more.

### EXPLANATION OF REFERENCE NUMERALS

1 multilayer ceramic capacitor
10 multilayer body
20 dielectric layer
30 internal electrode layer
31 first internal electrode layer
31A first counter portion
31B first extension portion
31BA first intermediate region
31BB first external electrode-side region
31BC first counter portion-side region
32 second internal electrode layer
32A second counter portion
32B second extension portion
32BA second intermediate region
32BB second external electrode-side region
32BC second counter portion-side region
40 external electrode
40A first external electrode
40B second external electrode
50 base electrode layer
50A first base electrode layer
50B second base electrode layer
L length direction
T lamination direction
W width direction
LS1 first end surface
LS2 second end surface
TS1 first main surface
TS2 second main surface
WS1 first lateral surface
WS2 second lateral surface

## Claims

1. A multilayer ceramic capacitor comprising:
a multilayer body including a plurality of dielectric layers and a plurality of internal electrode layers that are laminated, a first main surface and a second main surface opposed to each other in a lamination direction, a first lateral surface and a second lateral surface opposed to each other in a width direction orthogonal or substantially orthogonal to the lamination direction, and a first end surface and a second end surface opposed to each other in a length direction orthogonal or substantially orthogonal to the lamination direction and the width direction;
a first external electrode on the first end surface; and
a second external electrode on the second end surface,
wherein
the plurality of internal electrode layers include first internal electrode layers and second internal electrode layers;
the first internal electrode layers each include a first extension portion and a first counter portion, the first extension portion including one end portion that extends toward and is exposed at the first end surface and is connected to the first external electrode, the first counter portion being connected to the first extension portion and opposed to a corresponding one of the second internal electrode layers provided adjacent to each other in the lamination direction;
the second internal electrode layers each include a second extension portion and a second counter portion, the second extension portion including one end portion that extends toward and is exposed at the second end surface and is connected to the second external electrode, the second counter portion being connected to the second extension portion and opposed to a corresponding one of the first internal electrode layers provided adjacent to each other in the lamination direction;
the first extension portion includes a first external electrode-side region in a vicinity of a portion of the first extension portion connected with the first external electrode, a first counter portion-side region in a vicinity of a portion of the first extension portion connected with the first counter portions, and a first intermediate region located between the first external electrode-side region and the first counter portion-side region;
the second extension portion includes a second external electrode-side region in a vicinity of a portion of the second extension portion connected with the second external electrode, a second counter portion-side region in a vicinity of a portion of the second extension portion connected with the second counter portions, and a second intermediate region located between the second external electrode-side region and the second counter portion-side region;
a coverage of the first intermediate region and the second intermediate region is lower than a coverage of the first external electrode-side region and the second external electrode-side region; and
the coverage of the first intermediate region and the second intermediate region is lower than a coverage of the first counter portion and the second counter portion.

2. The multilayer ceramic capacitor according to claim 1, wherein a coverage of the first counter portion-side region and the second counter portion-side region is higher than the coverage of the first intermediate region and the second intermediate region.

3. The multilayer ceramic capacitor according to claim 1 or 2, wherein the coverage of the first intermediate region and the second intermediate region is 55% or more.

4. The multilayer ceramic capacitor according to any one of claims 1 to 3, wherein the coverage of the first intermediate region and the second intermediate region is 80% or less.

5. The multilayer ceramic capacitor according to any one of claims 1 to 4, wherein the coverage of the first external electrode-side region and the second external electrode-side region is higher than the coverage of the first intermediate region and the second intermediate region, and is 68% or more.

6. The multilayer ceramic capacitor according to any one of claims 1 to 5, wherein the coverage of the first counter portion-side region and the second counter portion-side region is higher than the coverage of the first intermediate region and the second intermediate region, and is 68% or more.

7. The multilayer ceramic capacitor according to any one of claims 1 to 6, wherein the coverage of the first counter portion and the second counter portion is higher than the coverage of the first intermediate region and the second intermediate region, and is 75% or more.
